# EUROPÄISCHE PATENTANMELDUNG

(11) **EP 0 911 618 A1**
(43) Veröffentlichungstag der Anmeldung: **28.04.1999**
(21) Anmeldenummer: 98118530.9
(22) Anmeldetag: 30.09.1998
(51) Int. Cl.: G01G 23/01

(54) **Elektronische Waage mit eichtechnischer Sicherungseinrichtung**

(30) Priorität: 27.10.1997 DE 19747323
(71) Anmelder: Bizerba GmbH & Co. KG, D-72336 Balingen (DE)
(72) Erfinder: Biermann, Helmut, 72336 Balingen (DE); Hoch, Wolfgang, 72379 Hechingen-Boll (DE); Müller, Klaus, 72379 Hechingen (DE); Nagat, Günter, 72469 Messstetten-Tieringen (DE)
(74) Vertreter: Hoeger, Stellrecht & Partner

(57) **Zusammenfassung**

Um bei einer elektronischen Waage mit einem Kraftaufnehmer mit Wägesensor, einer Auswerteelektronik, einem Datenspeicher für eichrelevante Waagendaten, einer Anzeige- und Eingabeeinheit und einer eichtechnischen Sicherungseinrichtung für die eichrelevanten Waagendaten die Kosten für aufwendige eichtechnische Abdeckungen und Plombierungen zu vermeiden und den Zeitaufwand für die Nacheichungen zu minimieren, wird vorgeschlagen, daß die Sicherungseinrichtung so ausgebildet ist, daß sie erst nach Eingabe eines korrekten Eich-Passworts den Eichdatenspeicher für Schreibzugriffe zugänglich macht, daß die Sicherungseinrichtung eine Protokolleinrichtung umfaßt, welche bei jedem Eichdatenschreibzugriff mit Eingabe des Eich-Passwortes einen Merker in einem schreibgeschützten Protokolldatenspeicher setzt, und daß die Waage einen Speicher in Form eines elektrisch beschreibbaren und löschbaren Speichers umfaßt, der in zwei Speicherbereiche eingeteilt ist, den Datenspeicherbereich für die eichrelevanten Waagendaten, die über das Eich-Passwort zugänglich und änderbar sind, und den geschützten, von außen nicht zugänglichen Protokolldatenspeicher für den Merker, einen Eichzähler und das diesem zugeordnete aktuelle Änderungstagesdatum.

## Beschreibung

Die Erfindung betrifft eine elektronische Waage mit einem Kraftaufnehmer mit Wägesensor, einer Auswerteelektronik, einem Datenspeicher für eichrelevante Waagendaten, einer Anzeigeeinheit und einer eichtechnischen Sicherungseinrichtung für die eichrelevanten Waagendaten.

Derartige Waagen zur Massebestimmung von Gegenständen, die im eichpflichtigen Verkehr eingesetzt werden, unterliegen den Gesetzen und Vorschriften der am Aufstellort zuständigen Behörde für das Eich- und Meßwesen.

Jede Waage wird vor Gebrauch einer Ersteichung und nach bestimmten Benutzungszeiträumen bzw. bei Überschreitung der zulässigen Eichfehler weiteren Nacheichungen unterzogen. Diese werden entweder durch die Eichbehörde oder durch autorisierte Personen des Waagenherstellers vorgenommen. Während ihres Benutzungszeitraums muß die Waage die eichtechnischen Fehlergrenzen einhalten und gegen Manipulationen weitgehend gesichert sein.

In der Regel schreibt die zuständige Eichbehörde vor, daß die Eichwerte auf dem Hauptschild gekennzeichnet werden und die Baugruppen bzw. Elemente, mit denen die eichrelevanten Waagendaten beeinflußt werden können, eichtechnisch gesichert bzw. plombiert werden müssen.

Je nach Eichvorschriften werden als eichtechnische Sicherungseinrichtungen Bleiplomben oder Sicherungsmarken verwendet, die an den entsprechenden Gehäuseteilen bzw. Abdeckungen der eichtechnisch zu sichernden Teile so angebracht werden, daß der Zugang nur nach Verletzung der Sicherung möglich ist.

Somit muß z. B. im Anschluß an eine Nachkalibrierung der Waage oder beim Tausch des Wägesensors bzw. der Auswerteelektronik die Waage durch einen Eichbeamten oder einen autorisierten Servicetechniker wieder plombiert bzw. mit einer neuen Sicherungsmarke versehen werden.

Von der DE 44 45 526 Al ist eine Waage mit Meßwertgeber und getrennter Anzeige- und Eingabeeinheit bekannt, bei der ein Schaltelement hinter einer eichtechnisch versiegelbaren Klappe des Waagengehäuses angeordnet ist. Eine Änderung der eichrelevanten Waagendaten ist nur nach Verletzung der Klappenversiegelung, Umstellen des Schaltelements und Neueingabe der Daten Über die Tastatur möglich. Die Beschädigung der Klappen-Versiegelung kann über einen zusätzlichen Sensor überwacht und zur Anzeige gebracht werden.

Für die Weiterbenutzung der Waage im eichpflichtigen Verkehr ist jedoch eine Nacheichung durch einen Eichbeamten, bzw. eine berechtigte Person erforderlich. Dabei muß nach der Prüfung der Waage eine neue Eichplombe bzw. Sicherungsmarke angebracht werden.

Es ist außerdem eine Waage mit einem eichtechnisch versiegelbaren Kalibrierschalter bekannt. Nachkalibrierungen und/oder Umschaltung der Gewichtsdimension von kg in lb oder umgekehrt können nach Verletzung der Versiegelung und Betätigen des Kalibrierschalters vorgenommen werden. Jede Nachkalibrierung und jede kg/1b-Umschaltung wird in einem sogenannten Logbuch (audit trail), das aus zwei nicht rückstellbaren elektronischen Zählern besteht, mitgezählt, so daß die Anzahl der Eingriffe über den Kalibrierschalter jederzeit nachprüfbar ist.

Auch bei dieser Lösung ist jedoch nach jedem Eingriff am Kalibrierschalter eine Nacheichung mit anschließender Plombierung durch eine autorisierte Person erforderlich.

Der Erfindung liegt die Aufgabe zugrunde, die Kosten für aufwendige eichtechnische Abdeckungen und Plombierungen zu vermeiden und den Zeitaufwand für die Nacheichungen zu minimieren.

Die Aufgabe wird erfindungsgemäß durch die kennzeichnenden Merkmale des Anspruchs 1 gelöst. Die Sicherungseinrichtung stellt damit sicher, daß nur durch Eingabe eines korrekten Eich-Passworts der Datenspeicher, der die eichrelevanten Waagendaten enthält, einem Schreibzugriff zugänglich und damit überschreibbar wird. Ohne Eingabe des korrekten Eich-Passworts bleibt dieser Datenspeicher zwar lesbar (notwendig im normalen Wägebetrieb), ist aber einem Schreibzugriff entzogen.

Somit wird eine Manipulation der Eichdaten durch nicht autorisierte Personen verhindert.

In einer weiteren Ausbildung der Erfindung wird bei jedem Eichdatenschreibzugriff in einem geschützten Protokolldatenspeicher ein Merker gesetzt und nach Eingabe eines Instandsetzer-Passworts ein nicht rücksetzbarer Eichzähler um 1 Ziffer hochgesetzt. Damit ist eine lückenlose Dokumentation der Anzahl der eichrelevanten Eingriffe waagenintern durchführbar. Der Eichzähler kann ein separater Zähler sein oder in den Protokolldatenspeicher integriert sein.

Mit dem Setzen des Merkers erfolgt vorzugsweise gleichzeitig eine Umstellung der Anzeigeeinheit z. B. auf permanentes Blinken, oder einen Anzeigetext: "Waage enteicht". Dies ist ein optischer Hinweis darauf, daß die Eichung der Waage verletzt ist.

Gleichzeitig mit dem Setzen des Merkers kann auch die Wägefunktion der Waage gesperrt werden, z. B. indem die Gewichtsanzeige unterbunden wird und das Gewichtssymbol blinkt oder bei Waagen mit Textanzeige statt der Gewichtsanzeige der Anzeigetext "Waage enteicht" erscheint.

Die durch ein eingegebenes, korrektes Eich-Passwort gesperrte Wägefunktion kann vorzugsweise nur mittels eines InstandsetzerPasswortes, das ein vom Eich-Passwort sich unterscheidendes Codewort sein sollte, wieder freigegeben werden.

Damit ist die Manipulation der Eichdaten durch Unbefugte doppelt abgesichert und somit praktisch ausgeschlossen. Die Manipulations-Sicherheit läßt sich noch dadurch erhöhen, daß nach einer mehrmaligen (z. B. 5 x) falschen und damit erfolglosen Eingabe des Eich-Passworts und/oder des Instandsetzer-Passworts die Eingabe ganz gesperrt wird.

Mit der korrekten Eingabe des Instandsetzer-Passwortes wird das aktuelle Tagesdatum abgefragt und zusammen mit dem Eichzählerstand unveränderbar abgespeichert. Bevorzugt sind alle Eichzählerstände jeweils zusammen mit dem entsprechenden Instandsetzerdatum über eine Tastenkombination aufrufbar und anzeigbar.

Dadurch entsteht bei einer Inspektion der Waage der Vorteil, daß jederzeit nachvollziehbar ist, wann und wie oft die Eichdaten der Waage geändert wurden.

Weitere vorteilhafte Ausgestaltungen ergeben sich aus den Unteransprüchen und der Beschreibung.

Die Erfindung betrifft weiterhin ein Verfahren zum Betreiben einer geeichten elektronischen Waage gemäß Anspruch 18. Vorteilhafte Ausgestaltungen des erfindungsgemäßen Verfahrens ergeben sich aus den Ansprüchen 19 und 20 sowie aus der folgenden Detailbeschreibung einer bevorzugten Ausführungsform der Erfindung.

Ein Ausführungsbeispiel der Erfindung ist in der Zeichnung dargestellt und wird im folgenden näher beschrieben. Es zeigen
- Fig. 1: eine elektronische Waage
- Fig. 2: ein Blockschaltbild der Waage
- Fig. 3: ein Blockschaltbild der Auswerteelektronik
- Fig. 4: ein Flußdiagramm eines erfindungsgemäßen Bedienerdialogs zur Änderung eichrelevanter Waagendaten
- Fig. 5/1 - 5/4: eine Anzeige- und Eingabeeinheit mit Anzeigebeispielen.

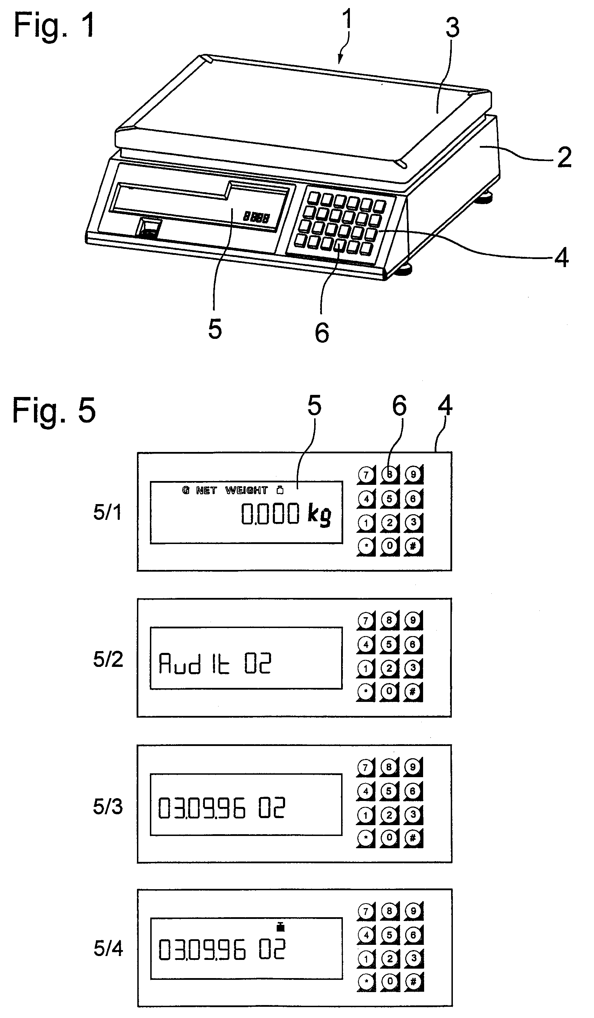

Eine in Fig. 1 dargestellte elektronische Waage 1 umfaßt ein Waagengehäuse 2, eine Lastplatte 3 zur Aufnahme der zu wägenden Waren und eine Anzeige- und Eingabeeinheit 4, mit einer Anzeige 5 und einer Tastatur 6, die wahlweise, wie in Fig. 1 dargestellt, im Waagengehäuse 2 integriert, oder in einem separaten Gehäuse untergebracht sein können, das über ein Datenkabel mit dem Waagengehäuse verbunden ist.

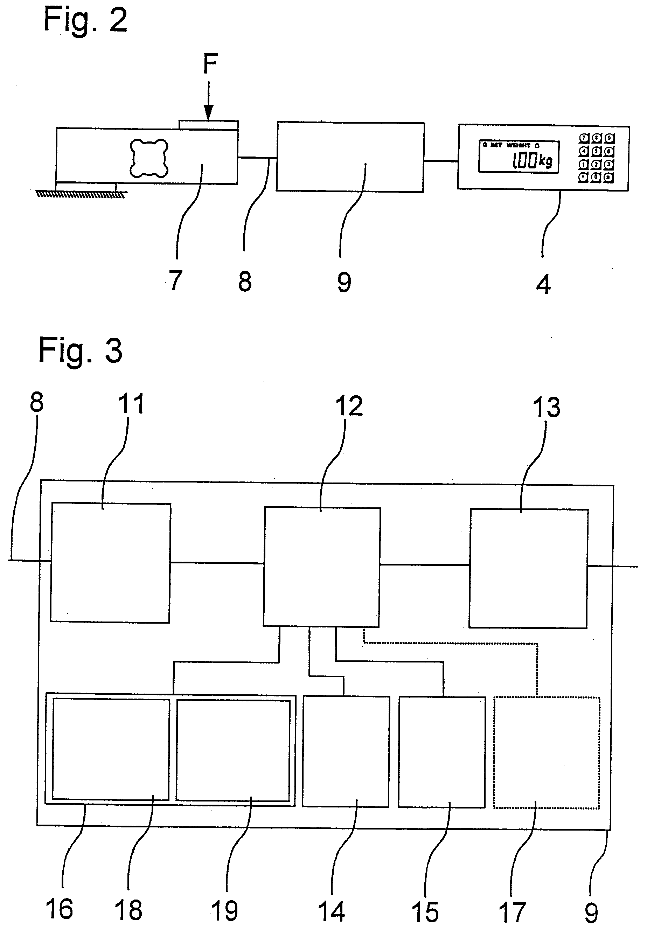

Die wesentlichen Komponenten der elektronischen Waage sind in einem Blockschaltbild in Fig. 2 dargestellt.

Ein an sich bekannter biegeelastischer Kraftaufnehmer 7 mit Wägesensor, z. B. nach dem DMS-, Elektromagnetischen Kraftkompensations- oder Schwingsaiten-Wägeprinzip wandelt die auf die Lastplatte (in Fig. 2 nicht gezeigt) wirkende Last "F" in Meßsignale um und gibt sie über ein Datenkabel 8 an eine Auswerteelektronik 9 weiter, welche die Meßsignale gegebenenfalls in digitale gewichtsproportionale Meßdaten umwandelt und die Meßsignale bzw. Meßdaten zusätzlichen Fehler-Korrekturen, wie z. B. Hysteresefehler- und Temperaturkorrekturen unterzieht und somit einen korigierten und eichtechnisch aufbereiteten Gewichtswert zur Verfügung stellt.

Der korrigierte und aufbereitete Gewichtswert wird an eine Anzeige- und Eingabeeinheit 4 weitergeleitet.

In Fig. 3 ist der Aufbau der Auswerteelektronik 9 detaillierter dargestellt.

Die in der gezeigten Ausführungsform, in die eine erfindungsgemäße Sicherungseinrichtung integriert ist, über das Datenkabel 8 ankommenden analogen Meßsignale werden über einen Analog-Digitalwandler 11 in digitale Werte umgewandelt, in einer Rechnereinheit (CPU) 12 fehlerkorrigiert und in gewichtsproportionale Meßdaten umgewandelt. Im Falle, daß der Kraftaufnehmer 7 bereits digitale Meßsignale liefert, können diese direkt als Meßdaten weiterbehandelt werden. Diese Meßdaten werden, wie bereits oben beschrieben, zu Gewichtsdaten aufbereitet.

Über einen Anzeige-Tastaturcontroller 13 werden die Gewichtswerte weiterverarbeitet und in der Anzeige- und Eingabeeinheit 4 zur Anzeige gebracht. Die Rechnereinheit 12 liefert außerdem je nach Verwendung der Waage weitere Anzeigedaten, wie z. B. Preis, Tagesdatum usw. und steuert u. a. den Tastaturdialog.

Der Rechnereinheit 12 zugeordnet ist ein Arbeitsspeicher 14 (RAM) für variabel programmierbare Daten und ein Programmspeicher 15, der als Festwertspeicher ausgeführt ist. Zusätzlich ist ein elektronischer Datenspeicher 16 vorhanden. Dieser kann aus einem gepufferten Teil des Arbeitsspeichers 14 gebildet sein oder in einem separaten Baustein z. B. EEPROM untergebracht sein. Außerdem kann, je nach Waagenausführung, ein zusätzlicher Uhrenbaustein 17 mit Kalenderfunktion vorhanden sein.

Der Datenspeicher 16 ist bevorzugt als elektronisch beschreibbarer und löschbarer Speicher ausgebildet (z. B. EEPROM) und kann in 2 Speicherbereiche eingeteilt werden, einen ersten Speicherbereich 18 für die eichrelevanten Waagendaten (siehe nachfolgende Tabelle), die nur über ein Eich-Passwort im Schreibzugriff zugänglich und änderbar sind und einem zweiten, von außen im Schreibzugriff nicht zugänglichen Protokolldaten-Speicherbereich 19 für das permanente Abspeichern des Eichzählerstands im Zeitpunkt der jeweils durchgeführten Eichung und das diesem jeweils zugeordnete aktuelle Tagesdatum.

Im internen Schreibzugriff, der auch durch autorisiertes Personal nicht beeinflußbar ist, wird bei dieser Ausführungsform ein Speicherplatz im Protokolldatenspeicher nur einmal beschrieben. D. h. ein Überschreiben von bereits notierten Protokolldaten ist ausgeschlossen.

Eichrelevante Waagendaten sind insbesondere die folgenden:
- Ländereinstellung
- Dimensionsumschaltung kg/lb
- Wägebereich
- Anzeigeschritt
- Mindestlast
- Dimension (g, kg, t, lb)
- Anzahl Nachkommastellen
- Positiver g-Faktor
- negativer g-Faktor

Die Sicherung der eichrelevanten Waagendaten 18 erfolgt bei der Ersteichung in der Regel nach Einstellung und Abgleich der Waagenparameter, in den EU-Mitgliedsstaaten mit einer werksseitigen Herstellereichung und in anderen Ländern bei der amtlichen Eichung durch die Eichbehörde.

Nach Ablauf der vom zuständigen Eichamt festgelegten Eichperiode, oder bei Überschreitung des zulässigen Eichfehlers der Waage und beim Funktionsausfall von eichrelevanten Teilen ist eine Nacheichung erforderlich.

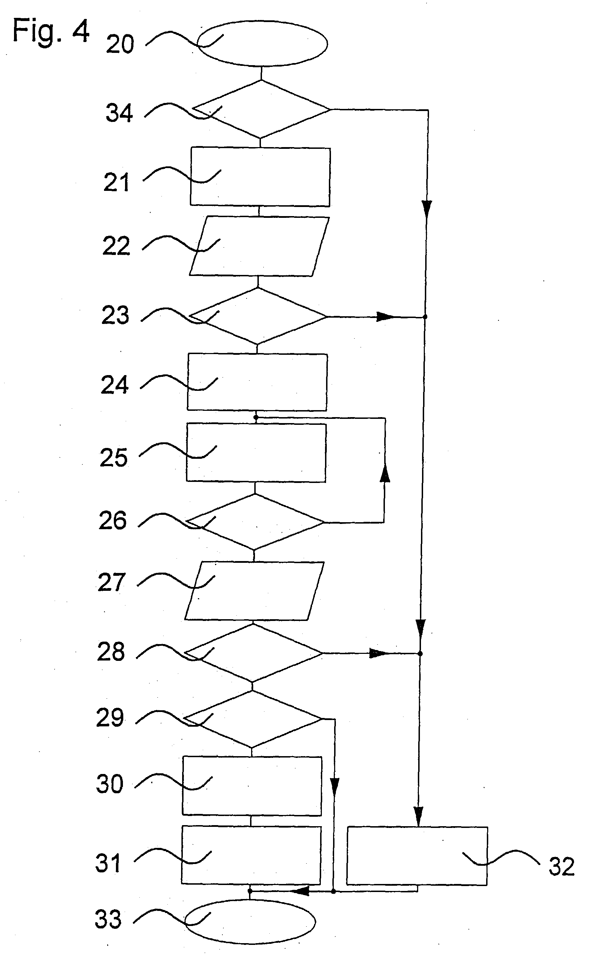

Im Flußdiagramm der Fig. 4 ist ein Ausführungsbeispiel des erfindungsgemäßen Ablaufs einer solchen Nacheichung dargestellt.

Während des normalen Wägebetriebs bzw. beim Einschalten, d. h. Start 20 der Waage, befindet sich diese im normalen Wägemodus. Über eine in der Serviceanleitung festgelegte Tastenkombination 21 wird der Modus zum Ändern der eichrelevanten Waagendaten aufgerufen. In der Anzeige 5 erscheint ein Hinweis 22, das Eich-Passwort einzugeben. Hierbei wird zuallererst im Schritt 34 geprüft, ob ein Fehlversuchszähler einen Maximalstand erreicht hat oder nicht (eine ausführliche Beschreibung hierzu findet sich im folgenden Text).

Das nun eingegebene Passwort wird mit dem beispielsweise im Programmspeicher 15 der CPU 12 gespeicherten Passwort einer Vergleichsprüfung 23 unterzogen.

Bei korrekter Eingabe des Eich-Passworts wird im Protokolldatenspeicher 19 ein Merker (Schritt 24) gesetzt. In der Anzeige 5 blinkt permanent ein entsprechendes Symbol, z. B. ein Gewichtssymbol, oder ein Anzeigetext "Waage enteicht" als Hinweis für die Benutzer bzw. Eichbeamten, daß die eichtechnische Sicherungseinrichtung verletzt und damit die Eichgültigkeit der Waage erloschen ist. Hierbei kann die Wägefunktion der Waage vollständig blockiert werden.

Damit ist das Menü freigegeben zur Eingabe geänderter eichrelevanter Waagendaten über die Tastatur 6 (Schritt 25).

Bei falscher Eich-Passwort-Eingabe 22 schaltet das Programm nach der Vergleichsprüfung 23 über einen Fehlversuchszähler 32 wieder in den normalen Wägemodus (Position 20) zurück. Nach mehreren, z. B. fünf Fehlversuchen hintereinander, wird das Menü zum Ändern der eichrelevanten Wägedaten durch eine Vergleichsprüfung 34 ganz gesperrt.

Jede eingegebene Waagendaten-Änderung verlangt eine abschließende Eingabebestätigung 26, bevor die geänderten Daten zunächst im Arbeitsspeicher (RAM) 14 der CPU 12 abgelegt werden. Unbestätigte Änderungen werden im RAM 14 nicht abgespeichert.

Nach Bestätigung der zu ändernden Waagendaten erfolgt die Abfrage und Eingabe eines Instandsetzer-Passwortes 27, bei Waagen ohne Uhrenbaustein 17 zusätzlich noch die Abfrage und Eingabe des Tagesdatums. Bei Waagen mit Uhrenbaustein wird das aktuelle Tagesdatum direkt von diesem Baustein ausgelesen. Das Instandsetzer-Passwort ist vorzugsweise ein sich vom Eich-Passwort unterscheidendes Codewort und wird ebenfalls einer Vergleichsprüfung 28 mit einem beispielsweise im Programmspeicher 15 abgelegten Instandsetzer-Passwort verglichen.

Nach korrekter Instandsetzer-Passworteingabe werden bevorzugt folgende eichrelevanten Waagendaten einer zusätzlichen Plausibilitätsprüfung 29 unterzogen:
- Höchstlast des Kraftaufnehmers 7, d. h. Obergrenze des Wägebereichs
- Anzeigeschrittigkeit des Kraftaufnehmers 7
- Datumseingabe gleich oder größer der letzten Datumseingabe.

Bei bestandener Plausibilitätsprüfung erfolgt die Speicherung 30 der geänderten, eichrelevanten Waagendaten d. h. Übernahme vom Arbeitsspeicher 14 in den Eichdaten-Speicherbereich 18 des Datenspeichers 16. Gleichzeitig wird mit Menüschritt 31 ein nicht rücksetzbarer Eichzähler um 1 erhöht, dessen Zählerstand zusammen mit dem aktuellen Datum im Speicherbereich 19 unveränderbar abgespeichert, der Merker für die Anzeige wieder gelöscht und die Waage einschließlich der Anzeige in den normalen Wägemodus 33 zurückgebracht. Damit ist die Waage wieder eichtechnisch gesichert nutzbar.

Im nicht veränderbaren Bereich 19 des Datenspeichers 16 können zusätzlich zu den Eichzählerständen mit Änderungsdatum wahlweise auch noch weitere ergänzende Textinformationen, wie Änderungsbeschreibung und/oder getauschtes Bauelement zugeordnet und abgespeichert werden. Damit ist eine lückenlose Dokumentation aller eichrelevanten Eingriffe in die Waage vorhanden, die jederzeit aufrufbar und kontrollierbar ist.

Eine Falscheingabe des Instandsetzer-Passwortes 27 führt bei der Vergleichsprüfung 28 zur Löschung der vorgenommenen Änderungen im Arbeitsspeicher 14. Das Menü schaltet über den Fehlversuchszähler 32 zurück auf den normalen Wägemodus. Nach mehreren Fehlversuchen wird das Menü zum Ändern der eichrelevanten Wägedaten gemäß den Menüschritten 21 ff. durch die Vergleichsprüfung 34 ganz gesperrt. Diese Sperrung verhindert Manipulationsversuche an den eichrelevanten Waagendaten durch nicht autorisierte Personen und kann nur durch einen werkseitigen Eingriff wieder aufgehoben werden.

Bei korrekt durchgeführter Änderung der eichrelevanten Waagendaten wird der Fehlversuchszähler 32 mit Menüschritt 31 wieder zurückgesetzt.

Wenn bei der Plausibilitätsprüfung 29 Fehler festgestellt werden, führt dies ebenfalls zur Löschung der vorgenommenen Änderungen im Arbeitsspeicher 14. Das Menü schaltet auf den normalen Wägemodus zurück.

Der in Fig. 4 beschriebene Ablauf zur Sicherung der eichrelevanten Waagendaten wird vorzugsweise bei der Ersteichung bzw. bei Nacheichungen der Waage angewendet und durch die Eichbehörde oder autorisierte Personen des Waagenherstellers vorgenommen.

Im Falle einer Reparatur der Waage, z. B. Austausch eines defekten Kraftaufnehmers, sollte auch der Reparaturdienst des Waagenbenutzers in der Lage sein, die Waage zu reparieren und für eine amtliche Nacheichung durch einen Eichbeamten vorzubereiten. Für diesen Reparaturfall ist der mit Fig. 4 beschriebene Ablauf leicht abgewandelt. Statt des Eich-Passwortes im Schritt 22 und des Instandsetzer-Passwortes im Schritt 27 wird ein von diesen beiden Passwörtern unterschiedliches "ReparaturPasswort" verwendet und eingegeben. Dieses Reparatur-Passwort wird vom Waagenhersteller an den Reparaturdienst des Waagenbenutzers nur unter der Voraussetzung mitgeteilt, daß Eingriffe in die Waage von gut geschultem Servicepersonal vorgenommen werden und eine exakte Dokumentation der Serviceeingriffe z. B. nach den ISO 9001-Kriterien erfolgt.

Die Eingabe des richtigen Reparatur-Passwortes in den Menüschritten 22 und 27 anstelle der bereits beschriebenen Eichbzw. Instandsetzer-Passworte bewirkt ebenfalls eine Vergleichsprüfung 28 mit dem im Programmspeicher 15 abgelegten ReparaturPasswort, eine Plausibilitätsprüfung 29 der eichrelevanten Waagendaten, die Speicherung 30 der geänderten Waagendaten in den Eichdatenspeicher 18 und das Hochsetzen des Eichzählers 31 um eine Ziffer. Im Unterschied zum Instandsetzer-Passwort wird jedoch durch das Reparatur-Passwort der Merker für das Blinken der Anzeige nicht gelöscht, d. h. die Waage bleibt enteicht. Die Löschung des Merkers für das Blinken und damit die eichtechnische Sicherung der Waage wird anschließend mittels Eingabe einer festgelegten Tastenkombination durch einen Eichbeamten oder eine andere autorisierte Person vorgenommen.

In Fig. 5/1 bis 5/4 ist ein Bedienbeispiel für die Kontrolle der Eichzählerstände dargestellt.

Fig. 5/1 zeigt ein Ausführungsbeispiel einer Anzeige- und Eingabeeinheit 4 mit einer 2-zeiligen alphanumerischen Anzeige 5 und einer Zehnertastatur 6 im Wägemodus.

In Fig. 5/2 wird durch Anwahl einer in der Bedienungsanleitung angegebenen Tastenkombination der gültige Eichzählerstand "Audit 02" angezeigt. Nach einer bestimmten Zeit, z. B. 5 Sekunden, oder mit einer weiteren Tastenkombination schaltet die Anzeige 5 gemäß Fig. 5/3 auf das aus dem Uhrenbaustein 17 ausgelesene Änderungsdatum um und zeigt nun das Datum gemeinsam mit dem gültigen Eichzählerstand an. Im Falle einer Änderung der eichrelevanten Waagendaten unter Verwendung eines Reparaturpassworts mit anschließender eichamtlicher Sicherung wird in der Anzeigeeinheit 5 ein zusätzliches Gewichtssymbol (vgl. Fig. 5/4) als Kennung angezeigt. Der aktuelle, gültige Eichzählerstand wird immer durch die höchste gespeicherte Zahl gebildet.

Über eine weitere Blättern-Tastenkombination können nun die im Speicher 19 abgelegten Eichzählerstände aller bisher vorgenommenen Eingriffe mit jeweiligem Änderungsdatum nacheinander aufgerufen werden. Darüber hinaus sind natürlich gegebenenfalls noch weitere Daten anzeigbar, die aber nicht notwendiger Bestandteil dieser Erfindung sind.

Über eine weitere Tastenkombination wird wieder in den Wägemodus nach Fig. 5/1 zurückgeschaltet.

## Patentansprüche

1. Elektronische Waage mit einem Kraftaufnehmer mit Wägesensor, einer Auswerteelektronik, einem Datenspeicher für eichrelevante Waagendaten, einer Anzeige- und Eingabeeinheit und einer eichtechnischen Sicherungseinrichtung für die eichrelevanten Waagendaten, dadurch gekennzeichnet, daß die Sicherungseinrichtung so ausgebildet ist, daß sie erst nach Eingabe eines korrekten Eich-Passworts den Eichdatenspeicher für Schreibzugriffe zugänglich macht,
daß die Sicherungseinrichtung eine Protokolleinrichtung umfaßt, welche bei jedem Eichdatenschreibzugriff mit Eingabe des Eich-Passworts einen Merker in einem schreibgeschützten Protokolldatenspeicher (19) setzt, und
daß die Waage einen Speicher (16) in Form eines beschreibbaren und löschbaren Speichers umfaßt, der in zwei Speicherbereiche eingeteilt ist, den Datenspeicherbereich (18) für die eichrelevanten Waagendaten, die über das EichPasswort zugänglich und änderbar sind, und den geschützten, von außen nicht zugänglichen Protokolldatenspeicher (19) für den Merker, einen Eichzähler und das diesem zugeordnete aktuelle Änderungstagesdatum.

2. Elektronische Waage nach Anspruch 1, dadurch gekennzeichnet, daß der elektrisch beschreibbare und löschbare Speicher (16) Bestandteil der Auswerteelektronik (9) der Waage ist.

3. Elektronische Waage nach einem der Ansprüche 1 oder 2, dadurch gekennzeichnet, daß mit dem Setzen des Merkers eine sichtbare Umstellung der Anzeigeeinheit (5) z. B. auf permanentes Blinken erfolgt, als optischer Hinweis darauf, daß die Eichung verletzt ist.

4. Elektronische Waage nach einem der Ansprüche 1 bis 3, dadurch gekennzeichnet, daß mit Eingabe des Eich-Passwortes die Wägefunktion der Waage gesperrt wird.

5. Elektronische Waage nach Anspruch 4, dadurch gekennzeichnet, daß die durch ein eingegebenes Eich-Passwort gesperrte Wägefunktion der Waage mittels Eingabe eines Instandsetzer-Passworts wieder freigebbar ist und ein nicht rücksetzbarer Eichzähler um eine Ziffer hochgesetzt wird.

6. Elektronische Waage nach Anspruch 5, dadurch gekennzeichnet, daß der Schreibzugriff auf den Eichdatenspeicher (18) und die damit verbundene Änderung der eichrelevanten Waagendaten erst nach korrekter Eingabe des Instandsetzer-Passworts und vor Freigabe der Wägefunktion der Waage erfolgt.

7. Elektronische Waage nach Anspruch 5 oder 6, dadurch gekennzeichnet, daß das Instandsetzer-Passwort ein sich vom Eich-Passwort unterscheidendes Codewort ist.

8. Elektronische Waage nach einem der Ansprüche 5 bis 7, dadurch gekennzeichnet, daß mit der Eingabe des Instandsetzer-Passworts gleichzeitig das aktuelle Tagesdatum abgefragt und im geschützten Protokolldatenspeicher (19) zusammen mit dem Eichzählerstand unveränderbar abgespeichert wird.

9. Elektronische Waage nach Anspruch 8, dadurch gekennzeichnet, daß die Waage einen Uhrenbaustein mit Kalenderfunktion (17) umfaßt und daß das aktuelle Tagesdatum vom Uhrenbaustein abgefragt wird.

10. Elektronische Waage nach Anspruch 9, dadurch gekennzeichnet, daß das aktuelle Tagesdatum über die Eingabetastatur eingegeben wird.

11. Elektronische Waage nach einem der Ansprüche 5 bis 10, dadurch gekennzeichnet, daß der gültige Eichzählerstand mit dem Instandsetzerdatum über die Waagen-Tastatur (6) aufrufbar und anzeigbar ist.

12. Elektronische Waage nach Anspruch 11, dadurch gekennzeichnet, daß die gespeicherten Eichzählerstände aller bisher vorgenommenen Eingriffe mit jeweiligem zugeordnetem Tagesdatum nacheinander aufrufbar und anzeigbar sind.

13. Elektronische Waage nach einem der Ansprüche 1 bis 12, dadurch gekennzeichnet, daß jede falsche Eingabe des EichPassworts und/oder des Instandsetzer-Passworts über einen Fehlversuchszähler (32) registriert wird und nach einer vorgegebenen Anzahl falscher Eingaben des Eich-Passworts und/oder des Instandsetzer-Passworts die Funktion zum Ändern der eichrelevanten Waagendaten ganz gesperrt wird.

14. Elektronische Waage nach einem der Ansprüche 1 bis 13, dadurch gekennzeichnet, daß bei der Eingabe der Höchstlast, des kleinsten Anzeigeschrittes und des Instandsetzer-Tagesdatums in den Eichdatenspeicher (18) bzw. den Protokolldatenspeicher (19) eine Plausibilitätsprüfung durchgeführt wird.

15. Elektronische Waage nach einem der Ansprüche 2 bis 14, dadurch gekennzeichnet, daß zu dem im nicht zugänglichen Protokolldatenspeicher (19) gespeicherten Eichzählerstand mit Instandsetzer-Tagesdatum weitere ergänzende Textinformationen, wie Änderungsbeschreibung und/oder getauschtes Bauelement, zugeordnet und abgespeichert werden.

16. Elektronische Waage nach einem der Ansprüche 1 bis 15, dadurch gekennzeichnet, daß die Sicherungseinrichtung so ausgebildet ist, daß sie nach Eingabe eines ReparaturPasswortes den Schreibzugriff auf die eichrelevanten Waagendaten freigibt, eine eichtechnische Sicherung der Waage jedoch nur aufgrund einer Eingabe einer gesonderten, festgelegten Tastenkombination erlaubt.

17. Elektronische Waage nach Anspruch 16, dadurch gekennzeichnet, daß die Sicherungseinrichtung einen Schreibzugriff auf die eichrelevanten Waagendaten in der Anzeigeeinheit der Waage mittels eines gesonderten Symbols sichtbar macht.

18. Verfahren zum Betreiben einer geeichten elektronischen Waage mit einer Auswerteelektronik für ein von einem Kraftaufnehmer erzeugtes Wägesignal, einem Datenspeicher für eichrelevante Waagendaten und einer eichtechnischen Sicherungseinrichtung, dadurch gekennzeichnet, daß die Waage aus einem normalen Wägemodus in einen Modus zum Ändern der eichrelevanten Waagendaten umschaltbar ist, in dem die Sicherungseinrichtung in einem ersten Schritt ein Eich-Passwort abfragt, in einem zweiten Schritt das eingegebene Eich-Passwort mit einem vorgegebenen, geschützt gespeicherten Eich-Passwort vergleicht und im Falle, daß das korrekte Eich-Passwort eingegeben wurde, den Datenspeicher für eichrelevante Waagendaten für Schreibzugriffe freigibt, und daß in einem Protokolldatenspeicher jeder ändernde Schreibzugriff auf den Eichdatenspeicher in Form eines aktuellen Eichzählerstandes und dem aktuellen Tagesdatum dauerhaft abgespeichert wird.

19. Verfahren nach Anspruch 18, dadurch gekennzeichnet, daß zum Umschalten auf den normalen Wägemodus unter Übernahme von geänderten eichrelevanten Waagendaten in den Eichdatenspeicher ein Instandsetzer-Passwort abgefragt wird, welches vorzugsweise von dem Eich-Passwort verschieden ist.

20. Verfahren nach Anspruch 18 oder 19, dadurch gekennzeichnet, daß mittels Eingabe eines Repartur-Passwortes von der Sicherungseinrichtung ein Schreibzugriff auf die eichrelevanten Waagendaten zugelassen wird, wobei die eichtechnische Sicherung erst nach Eingabe einer gesonderten, festgelegten Tastenkombination erfolgt.

21. Verfahren nach Anspruch 20, dadurch gekennzeichnet, daß nach einem Schreibzugriff auf die eichrelevanten Waagendaten mittels Reparatur-Passwort in der Anzeigeeinheit der Waage ein gesondertes Symbol angezeigt wird.
